(19) Europäisches Patentamt
European Patent Office
Office européen des brevets

(11) **EP 4 098 928 A1**

(12) **EUROPÄISCHE PATENTANMELDUNG**

(43) Veröffentlichungstag:
**07.12.2022 Patentblatt 2022/49**

(21) Anmeldenummer: **21177330.4**

(22) Anmeldetag: **02.06.2021**

(51) Internationale Patentklassifikation (IPC):
***F16P 3/14*** *(2006.01)*

(52) Gemeinsame Patentklassifikation (CPC):
**F16P 3/142; F16P 3/141; F16P 3/147**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Leuze electronic GmbH + Co. KG**
**73277 Owen/Teck (DE)**

(72) Erfinder:
• **Feller, Bernhard**
**86316 Friedberg (DE)**
• **Heckmayr, Alexander**
**86807 Buchloe (DE)**
• **Kretzschmar, Rolf**
**82275 Emmering (DE)**

(74) Vertreter: **Ruckh, Rainer Gerhard**
**Patentanwalt**
**Jurastrasse 1**
**73087 Bad Boll (DE)**

(54) **SENSORANORDNUNG UND VERFAHREN ZUM BETRIEB EINER SENSORANORDNUNG**

(57) Die Erfindung betrifft eine Sensoranordnung (1) mit wenigstens einem Sensor (2) zur Erfassung von Objekten in einem Überwachungsbereich, wobei Sensorsignale des wenigstens einen Sensors (2) wenigstens einer Verarbeitungseinheit mit einem KI(Künstliche Intelligenz)-Verarbeitungsalgorithmus (212, 222) zugeführt sind. Aus in der Verarbeitungseinheit generierten Verarbeitungsergebnissen wird als Gesamtergebnis ein Ausgangssignal der Sensoranordnung (1) generiert. Für Berechnungs-Parameter des KI(Künstliche Intelligenz)-Verarbeitungsalgorithmus (212, 222) werden Signaturen berechnet, die mit vorgegebenen Sollwerten zur Durchführung von Fehlerkontrollen verglichen werden. Die Erfindung betrifft weiterhin ein entsprechendes Verfahren.

## Fig. 1

**Beschreibung**

Die Erfindung betrifft eine Sensoranordnung und ein Verfahren zum Betrieb einer Sensoranordnung.

Derartige Sensoranordnungen umfassen wenigstens einen Messwerte generierenden Sensor. Diese messenden Sensoren können beispielsweise von Flächendistanzsensoren, das heißt scannenden Distanzsensoren, oder auch Kamerasensoren ausgebildet sein.

Diese Sensoren können in unterschiedlichen industriellen Applikationen eingesetzt werden, wobei die Sensoren insbesondere Überwachungsfunktionen wahrnehmen, um Automatisierungsprozesse zu überwachen und kontrollieren. Die Funktionsweise eines derartigen Sensors ist derart, dass abhängig von den Messwerten in einem vorzugsweise im Sensor integrierten Sicherheitsmodul, insbesondere einem Überwachungsmodul, eine Sicherheitsfunktion, zum Beispiel eine Überwachungsfunktion, generiert wird, die generell auch eine Automatisierungsfunktion sein kann.

Beispielsweise kann aus Messwerten in Form von Positionswerten als Sicherheitsfunktion oder Automatisierungsfunktion Steuergrößen zur Steuerung eines fahrerlosen Transportfahrzeugs oder die Schutzfeldgröße für eine Überwachungsfunktion abgeleitet werden.

Insbesondere kann der Sensor als Sicherheitssensor ausgebildet sein, sodass die Sensoranordnung im Bereich der Sicherheitstechnik eingesetzt werden kann. Ein typischer Anwendungsfall ist eine Gefahrenbereichsüberwachung an einer gefahrbringenden Anlage, die insbesondere auch von einem Fahrzeug gebildet sein kann. In diesem Fall wird mit dem Sicherheitssensor ein Schutzfeld überwacht, das den Gefahrenbereich sichert. Im Fall einer Vorfeldüberwachung an einem fahrerlosen Transportfahrzeug muss das Schutzfeld an die aktuelle Fahrsituation angepasst werden.

Bei derartigen Sicherheitssensoren wird im Überwachungsmodul generell eine Sicherheitsfunktion generiert. Die Sicherheitsfunktion kann darin bestehen, eine zu überwachende Anlage abzuschalten, wenn im überwachten Schutzfeld ein Objekteingriff registriert wird. Dadurch wird die Anlage in einen sicheren Zustand überführt.

Eine weitere Sicherheitsfunktion kann eine automatische Schutzfeldumschaltung bei einer Schutzfeldüberwachung an einem fahrerlosen Transportfahrzeug sein, die abhängig von den aktuellen Messwerten des Sensors erfolgt.

Um Fehlfunktionen der Sensoranordnung auszuschließen, müssen die Berechnungsmethoden, mit denen aus Messwerten des Sensors Überwachungsfunktionen beziehungsweise Automatisierungsfunktionen generiert werden, zuverlässig sein. Bei Sensoranordnungen mit einem Sicherheitssensor sind diese Anforderungen noch erhöht, da für die Sensoranordnung und insbesondere den Sicherheitssensor hinsichtlich der Auswertung der Messwerte und der Generierung einer Sicherheitsfunktion eine hohe Fehlersicherheit gefordert wird.

Die Berechnungsmethoden und deren Überprüfung, die zur Generierung der Überwachungsfunktion beziehungsweise Sicherheitsfunktion eingesetzt werden, sind daher äußerst aufwändig.

Der Erfindung liegt die Aufgabe zugrunde eine Sensoranordnung bereitzustellen, die eine hohe Zuverlässigkeit aufweist.

Zur Lösung dieser Aufgabe sind die Merkmale der unabhängigen Ansprüche vorgesehen. Vorteilhafte Ausführungsformen und zweckmäßige Weiterbildungen der Erfindung sind in den abhängigen Ansprüchen beschrieben.

Die Erfindung betrifft eine Sensoranordnung mit wenigstens einem Sensor zur Erfassung von Objekten in einem Überwachungsbereich, wobei Sensorsignale des wenigstens einen Sensors wenigstens einer Verarbeitungseinheit mit einem KI(Künstliche Intelligenz)-Verarbeitungsalgorithmus zugeführt sind. Aus in der Verarbeitungseinheit generierten Verarbeitungsergebnissen wird als Gesamtergebnis ein Ausgangssignal der Sensoranordnung generiert. Für Berechnungs-Parameter des KI(Künstliche Intelligenz)-Verarbeitungsalgorithmus werden Signaturen berechnet, die mit vorgegebenen Sollwerten zur Durchführung von Fehlerkontrollen verglichen werden.

Die Erfindung betrifft weiterhin ein entsprechendes Verfahren.

Die erfindungsgemäße Sensoranordnung dient generell zur Erfassung von Objekten in einem Überwachungsbereich. Anhand der Sensorsignale des oder der Sensoren wird ein Ausgangssignal generiert, das generell eine Information über das Vorhandensein eines Objekts im Überwachungsbereich liefert. Dabei kann das Ausgangssignal ein binäres Schaltsignal sein, dessen Schaltzustände angeben, ob sich ein Objekt im Überwachungsbereich befindet oder nicht. Generell können als Ausgangssignale auch Distanz- oder Positionswerte ausgegeben werden.

Gemäß einer besonders vorteilhaften Ausführungsform ist die Sensoranordnung eine Sicherheitssensoranordnung, welche zur Überwachung eines Gefahrenbereichs an einer Anlage ausgebildet ist. Die Funktion der Sicherheitssensoranordnung ist derart, dass diese bei Registrieren eines Objekteingriffs im Gefahrenbereich als Ausgangssignal eine Sicherheitsfunktion für die Anlage generiert. Insbesondere generiert die Sicherheitssensoranordnung ein binäres Schaltsignal, dessen Schaltzustände angeben, ob sich ein Objekt im Gefahrenbereich befindet oder nicht. Wird mit der Sicherheitssensoranordnung ein Objekt im Gefahrenbereich detektiert, wird durch das Schaltsignal der Sicherheitssensoranordnung eine Sicherheitsfunktion derart ausgelöst, dass die Anlage in einen sicheren Zustand überführt wird, so dass von dieser keine Gefahren mehr ausgehen können. Insbesondere wird die Anlage stillgesetzt.

Ein wesentlicher Vorteil der erfindungsgemäßen Sensoranordnung besteht darin, dass die Auswertung der Sensorsignale des oder der Sensoren mittels KI-Verarbeitungsalgorithmen erfolgt. Dadurch wird ein selbstlernendes Auswertesystem geschaffen, welches sich selbständig an bestimmte Randbedingungen anpasst. Damit wird eine hohe Zuverlässigkeit der Objektdetektionen auch bei sich ändernden Randbedingungen gewährleistet.

Ein weiterer wesentlicher Vorteil besteht darin, dass für jeden KI-Verarbeitungsalgorithmus durch Berechnung von Berechnungs-Parametern und Vergleich der Berechnungs-Parameter mit abgespeicherten, vorgegebenen Sollwerten eine Fehlerkontrolle erfolgt, wodurch die KI-Verarbeitungsalgorithmen abgesichert sind. Dadurch wird die Fehlersicherheit der Sensoranordnung insgesamt erhöht. Insbesondere können damit Sicherheitsanforderungen für einen Einsatz der Sensoranordnung als Sicherheitssensoranordnung im Bereich der Sicherheitstechnik erfüllt werden.

Mit der erfindungsgemäßen Fehlerkontrolle sind die Berechnungs-Parameter des oder der KI-Verarbeitungsalgorithmen gegen Verfälschungen durch bauteilbedingte Ausfälle oder gegen externe Einflüsse abgesichert, da durch den Vergleich der Signaturen mit den Sollwerten derartige Fehler aufgedeckt werden, um dann entsprechende Gegenmaßnahmen einzuleiten.

Bauteilbedingte Ausfälle können Unterbrechungen von Bauelementen, Kurzschlüssen, Oszillationen in Bauelementen und dergleichen sein. Externe Einflüsse können elektrische Störungen wie induzierte Ströme, Über- oder Unterspannungen sein. Auch können externe Einflüsse Strahlungen, insbesondere radioaktive Strahlungen, Röntgenstrahlungen, HF-Strahlungen, kosmische Strahlungen, Teilchenstrahlungen oder dergleichen sein.

Insbesondere Fehler aufgrund von externen Einflüssen können nicht durch Speichertests aufgedeckt werden, da Speicher durch die externen Einflüsse momentane Fehlerzustände erfahren, aber grundsätzlich funktionsfähig bleiben.

Daher wird mit der erfindungsgemäßen Fehlerkontrolle eine erheblich verbesserte und erweiterte Aufdeckung von Fehlern ermöglicht.

Beispielsweise sind die Signaturen in Form von Prüfsummen ausgebildet.

Insbesondere können die Signaturen mit CRC-Algorithmen berechnet werden.

Gemäß einer vorteilhaften Ausführungsform der Erfindung ist eine mehrkanalige Anordnung von Verarbeitungseinheiten mit jeweils einem KI-Verarbeitungsalgorithmus vorgesehen.

Dabei werden jedem Kanal Sensorsignale eines Sensors zugeführt.

Durch die mehrkanalige Auswertung wird eine weiter erhöhte Fehlersicherheit der Sensoranordnung erhalten.

Besonders vorteilhaft sind unterschiedliche Sensoren vorgesehen.

In diesem Fall sind die Eingabedaten für die einzelnen KI-Verarbeitungsalgorithmen diversitär, das heißt unterschiedlich und unabhängig voneinander.

Damit multiplizieren sich die einzelnen Fehlerwahrscheinlichkeiten der Auswertungen in den einzelnen KI-Verarbeitungsalgorithmen zu einer Gesamtfehlerwahrscheinlichkeit, mit der das Gesamtergebnis, das heißt das Ausgangssignal der Sensoranordnung generiert wird.

Dadurch lassen sich insbesondere Gesamtfehlerwahrscheinlichkeiten realisieren, die für einen Einsatz der Sensoranordnung als Sicherheitssensoranordnung im Bereich der Sicherheitstechnik gefordert werden.

Im Bereich der Sicherheitstechnik wird die Fehlersicherheit, die insbesondere die Sicherheitssensoranordnung bei der Generierung des Ausgangssignals erfüllen muss, durch das durch normative Anforderungen (insbesondere der Norm DIN EN 61508) bestimmte SIL (Sicherheitsintegritätslevel) bestimmt. Dieser hängt insbesondere von der Anforderungsrate dr ab, das heißt von der Rate pro Zeiteinheit, mit der eine Sicherheitsfunktion generiert werden muss.

Da bei der erfindungsgemäßen Sensoranordnung zur Signalauswertung KI-Algorithmen eingesetzt werden, die statische Auswerteverfahren darstellen, muss zur Erfüllung der Anforderungen für den Einsatz im Bereich der Sicherheitstechnik eine sehr kleine Gesamtfehlerwahrscheinlichkeit $P_{ges}$ gefordert werden, die typischerweise bei $P_{ges} < 10^{-7}$ liegt.

Wenn zur Signalauswertung mehrere KI-Verarbeitungsalgorithmen eingesetzt werden, welchen diversitäre unterschiedliche voneinander unabhängige Eingabedaten zugeführt werden, ergibt sich die Gesamtfehlerwahrscheinlichkeit aus dem Produkt der Einzelfehlerwahrscheinlichkeiten $p_i$ ($i = 1... N$, wobei N = Anzahl der KI-Verarbeitungsalgorithmen ist).

Bei einer Sensoranordnung mit zwei KI-Verarbeitungsalgorithmen ergibt sich die Gesamtfehlerwahrscheinlichkeit aus

$$P_{ges} = p_1 \cdot p_2$$

Unter der Voraussetzung, dass $p_1 = p_2 = p_e$ ist, ergibt sich für die Einzelfehlerwahrscheinlichkeit $p_e$

$$p_e = \sqrt{P_{ges}}$$

Dies bedeutet, dass für die einzelnen KI-Verarbeitungsalgorithmen erheblich kleinere Fehlerwahrscheinlichkeiten realisiert werden müssen, um die erforderliche Fehlersicherheit

$$F = 1 - P_{ges}$$

des Gesamtsystems zu realisieren. Diese erforderliche Fehlersicherheit, das heißt die Wahrscheinlichkeit, dass die Sensoranordnung ein korrektes Gesamtergebnis liefert, wird auch Vertrauensmaß genannt.

Vorteilhaft sind die KI-Verarbeitungsalgorithmen von neuronalen Netzen oder von Entscheidungsbäumen gebildet.

Die KI-Verarbeitungsalgorithmen und KI-Algorithmen sind in einer Rechnereinheit der Sensoranordnung als Softwaremodule implementiert.

Gemäß einer vorteilhaften Ausführungsform ist wenigstens eine Entscheidereinheit vorgesehen, in welcher abhängig von den Verarbeitungsergebnissen der KI-Verarbeitungsalgorithmen das Gesamtergebnis erzeugt ist.

Die oder jede Entscheidereinheit ist ebenfalls in Form von Softwaremodulen in der Rechnereinheit der Sensoranordnung implementiert.

Vorteilhaft werden in der Entscheidereinheit die Verarbeitungsergebnisse logisch verknüpft.

Weiterhin werden in der Entscheidereinheit die Verarbeitungsergebnisse miteinander verglichen.

Gemäß einer vorteilhaften Ausgestaltung wird anhand von berechneten Signaturen eine gegenseitige Überwachung von Kanälen der mehrkanaligen Anordnung von KI-Verarbeitungsalgorithmen durchgeführt.

Dabei können Signaturen für Zwischenergebnisse, Verarbeitungsergebnisse und das Gesamtergebnis berechnet werden.

Insbesondere können entsprechende Signaturen unterschiedlicher Kanäle miteinander verglichen werden.

Durch die gegenseitige Überwachung der einzelnen Kanäle wird die Fehlersicherheit der Sensoranordnung weiter erhöht.

Dabei werden vorteilhaft in den Kanälen zyklische Signatur-Prüfungen durchgeführt.

Diese zyklischen Signatur-Prüfungen können prinzipiell fortlaufend durchgeführt werden.

Jedoch ist es auch ausreichend, dass die Signatur-Prüfungen während vorgegebener Zeitintervalle durchgeführt werden, das heißt zwischen den einzelnen Zeitintervallen erfolgen keine Signatur-Prüfungen.

Dies kann vorteilhaft derart umgesetzt werden, dass die Signatur-Prüfungen in den einzelnen Kanälen zeitlich versetzt durchgeführt werden.

Zweckmäßig werden dann Verarbeitungsergebnisse eines Kanals für die Dauer, in welchem in diesem Kanal Signatur-Prüfungen durchgeführt werden, bei der Berechnung des Gesamtergebnisses nicht berücksichtigt.

Gemäß einer vorteilhaften Ausgestaltung ist es auch möglich, dass mit einzelnen Signatur-Prüfungen nur einzelne Schichten von KI-Verarbeitungsalgorithmen geprüft werden.

Dann werden in einer Folge von Signatur-Prüfungen die einzelnen Schichten des oder der KI-Verarbeitungsalgorithmen zeitlich nacheinander geprüft. Prinzipiell können homogen ausgebildete Kanäle mit identischen KI-Verarbeitungsalgorithmen vorgesehen sein.

Vorteilhaft sind die KI-Verarbeitungsalgorithmen der einzelnen Kanäle diversitär ausgebildet oder arbeiten mit diversitären Parametern.

Die Sensoren der erfindungsgemäßen Sensoranordnung sind vorteilhaft als messende Sensoren ausgebildet. Dabei kann ein Sensor prinzipiell als Radarsensor oder Ultraschallsensor ausgebildet sein.

Besonders vorteilhaft ist der oder jeder Sensor ein optischer Sensor.

Beispielsweise kann der optische Sensor als Flächendistanzsensor, das heißt scannender Distanzsensor ausgebildet sein. Weiterhin kann der Sensor als Kamerasensor ausgebildet sein, wobei besonders vorteilhaft dieser zur Durchführung von Distanzmessungen ausgebildet ist. Vorteilhaft erfolgen die Distanzmessungen nach einem Impuls-Laufzeit-Verfahren.

Gemäß einer vorteilhaften Weiterbildung werden in den oder die KI-Verarbeitungsalgorithmen Testgrößen eingegeben und durch erhaltene Ergebnisgrößen mit vorgegebenen Soll-Ergebnisgrößen verglichen.

Die Erfindung wird im Folgenden anhand der Zeichnungen erläutert. Es zeigen:

Figur 1:     Schematische Darstellung eines ersten Beispiels der erfindungsgemäßen Sensoranordnung.

Figur 2:     Schematische Darstellung eines zweiten Beispiels der erfindungsgemäßen Sensoranordnung.

Figur 3:     Beispiel eines Aufbaus der Sensoranordnung gemäß Figur 2.

Figur 4:     Beispiel eines KI-Verarbeitungsalgorithmus in Form eines neuronalen Netzes.

Figur 5:     Detaildarstellung des neuronalen Netzes gemäß Figur 4.

Figur 6:     Beispiel einer Signatur-Prüfung für einen KI-Verarbeitungsalgorithmus.

Figur 7:     Erstes Beispiel eines zeitlichen Ablaufs von Prüfungen für die Sensoranordnung gemäß Figur 3.

Figur 8:     Zweites Beispiel eines zeitlichen Ablaufs von Prüfungen für die Sensoranordnung gemäß Figur 3.

Figur 9:     Drittes Beispiel eines zeitlichen Ablaufs von Prüfungen für die Sensoranordnung gemäß Figur 3.

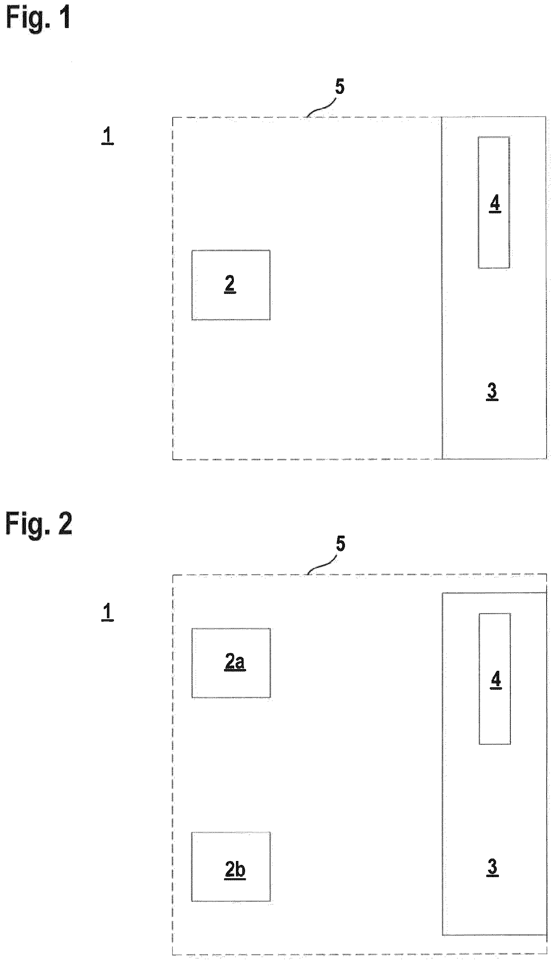

Figur 1 zeigt schematisch ein erstes Ausführungsbeispiel der erfindungsgemäßen Sensoranordnung 1. Diese Sensoranordnung 1 umfasst einen Sensor 2, der zur Absicherung einer Anlage 3 eingesetzt wird. Die Anlage 3 wird von einer Steuerung 4 gesteuert.

Figur 2 zeigt schematisch ein zweites Ausführungsbeispiel der erfindungsgemäßen Sensoranordnung 1. Diese Sensoranordnung 1 umfasst zwei Sensoren 2a, 2b, die zur Absicherung einer Anlage 3 eingesetzt werden. Generell können auch mehr als zwei Sensoren eingesetzt werden.

Die Sensoren 2, 2a, 2b der erfindungsgemäßen Sensoranordnung 1 sind vorteilhaft als messende Sensoren ausgebildet. Dabei kann ein Sensor 2, 2a, 2b prinzipiell als Radarsensor oder Ultraschallsensor ausgebildet sein.

Besonders vorteilhaft ist der oder jeder Sensor 2, 2a, 2b ein optischer Sensor.

Beispielsweise kann der optische Sensor als Flächendistanzsensor, das heißt scannender Distanzsensor ausgebildet sein. Weiterhin kann der Sensor 2, 2a, 2b als Kamerasensor ausgebildet sein, wobei besonders vorteilhaft dieser zur Durchführung von Distanzmessungen ausgebildet ist. Vorteilhaft erfolgen die Distanzmessungen nach einem Impuls-Laufzeit-Verfahren.

Die erfindungsgemäße Sensoranordnung 1 dient generell zur Erfassung von Objekten in einem Überwachungsbereich. Anhand der Sensorsignale des oder der Sensoren 2, 2a, 2b wird ein Ausgangssignal generiert, das generell eine Information über das Vorhandensein eines Objekts im Überwachungsbereich liefert. Dabei kann das Ausgangssignal ein binäres Schaltsignal sein, dessen Schaltzustände angeben, ob sich ein Objekt im Überwachungsbereich befindet oder nicht. Generell können als Ausgangssignale auch Distanz- oder Positionswerte ausgegeben werden.

Im vorliegenden Fall ist die Sensoranordnung 1 eine Sicherheitssensoranordnung, welche zur Überwachung eines Gefahrenbereichs 5 an der Anlage 3 ausgebildet ist. Die Funktion der Sicherheitssensoranordnung ist derart, dass diese bei Registrieren eines Objekteingriffs im Gefahrenbereich 5 als Ausgangssignal eine Sicherheitsfunktion für die Anlage 3 generiert.

Dabei generiert die Sicherheitssensoranordnung ein binäres Schaltsignal, dessen Schaltzustände angeben, ob sich ein Objekt im Gefahrenbereich 5 befindet oder nicht. Wird mit der Sicherheitssensoranordnung ein Objekt im Gefahrenbereich 5 detektiert, wird durch das Schaltsignal der Sicherheitssensoranordnung eine Sicherheitsfunktion derart ausgelöst, dass die Anlage 3 in einen sicheren Zustand überführt wird, so dass von dieser keine Gefahren mehr ausgehen können. Insbesondere wird die Anlage 3 stillgesetzt.

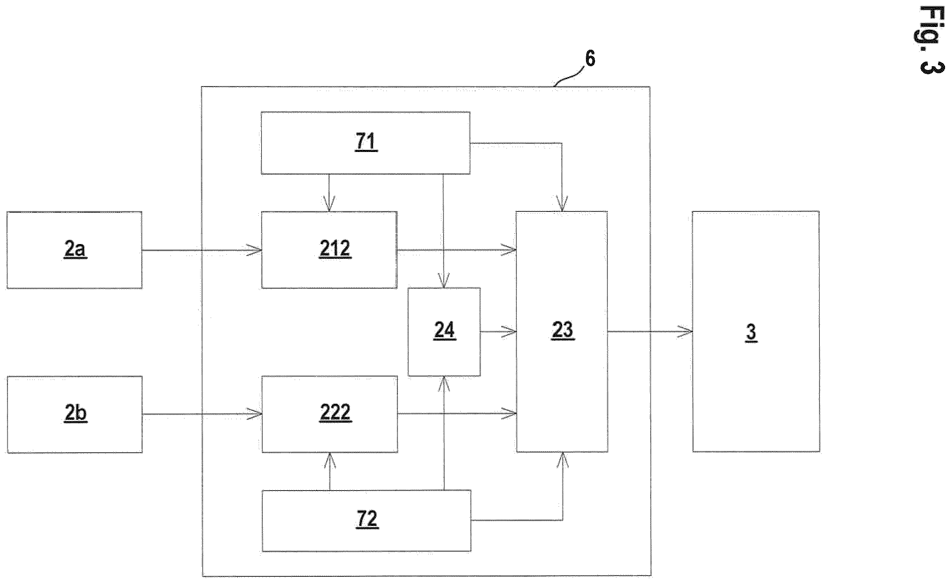

Figur 3 zeigt ein Aufbauschema für die Sensoranordnung 1 gemäß Figur 2. Die Sensoren 2a, 2b können unterschiedlich ausgebildet sein, vorzugsweise mit unterschiedlichen Sensortechnologien. Beispielsweise ist der erste Sensor 2a ein Flächendistanzsensor und der zweite Sensor 2b eine distanzmessende 3D-Kamera.

Als Auswerteeinheit ist den Sensoren 2a, 2b eine Rechnereinheit 6 zugeordnet.

Die einzelnen, in Figur 3 dargestellten Einheiten in der Rechnereinheit 6 sind von Software-Modulen gebildet.

Mit den Sensoren 2a, 2b werden unterschiedliche Sensorsignale generiert, die voneinander unabhängige, diversitäre Eingabedaten für jeweils einen KI-Verarbeitungsalgorithmus 212, 222 in einer Verarbeitungseinheit bilden.

Die KI-Verarbeitungsalgorithmen 212, 222 sind von neuronalen Netzen 102 oder Entscheidungsbäumen gebildet.

In den KI-Verarbeitungsalgorithmen 212, 222 werden abhängig von den Eingabedaten Verarbeitungsergebnisse generiert, die einer gemeinsamen Entscheidereinheit 23 zugeführt werden. In der Entscheidereinheit 23 werden die Verarbeitungsergebnisse miteinander verglichen und/oder logisch verknüpft, wodurch als Gesamtergebnis das Schaltsignal für die Anlage 3 generiert wird.

Die KI-Verarbeitungsalgorithmen 212, 222 bilden eine zweikanalige Anordnung zur Auswertung von Sensorsignalen der Sensoren. Die Kanäle können homogen ausgebildet sein, das heißt die KI-Verarbeitungsalgorithmen 212, 222 sind dann identisch ausgebildet.

Alternativ sind diversitär ausgebildete Kanäle vorgesehen. In diesem Fall können diversitäre KI-Verarbeitungsalgorithmen 212, 222 oder mit diversitären Berechnungs-Parametern versehene KI-Verarbeitungsalgorithmen vorgesehen sein.

Nur bei homogenen Kanälen sind Quervergleiche zwischen diesen Kanälen möglich.

Jedem KI-Verarbeitungsalgorithmus 212, 222 ist eine Testeinheit 71, 72 zugeordnet. Die Testeinheiten 71, 72 sind mit einer Vergleichereinheit 24 verbunden.

Mit den Testeinheiten 71, 72 erfolgt eine Fehlerkontrolle der KI-Verarbeitungsalgorithmen 212, 222. Wird mit der Fehlerkontrolle ein Fehler in einer der KI-Verarbeitungsalgorithmen 212, 222 aufgedeckt, wird eine Fehlermeldung generiert.

Erfindungsgemäß erfolgt in den Testeinheiten 71, 72 eine Signatur-Prüfung derart, dass für Berechnungs-Parameter der KI-Verarbeitungsalgorithmen 212, 222 Signaturen berechnet werden und diese mit vorgegebenen Sollwerten verglichen werden.

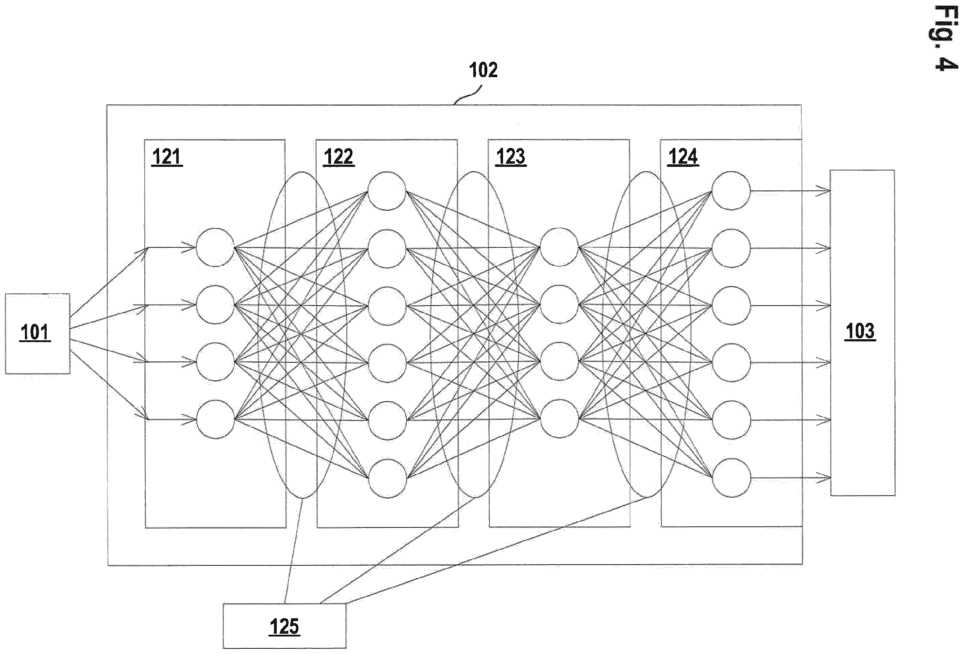

Figur 4 zeigt schematisch den Aufbau eines neuronalen Netzes 102.

Das neuronale Netz 102 umfasst im vorliegenden Fall eine Eingangsschicht 121, zwei Zwischenschichten 122, 123 und eine Ausgangsschicht 124.

Die Eingangsschicht 121 dient zur Aufnahme von Eingangsgrößen 101, die von Sensorsignalen eines der Sensoren 2, 2a, 2b gebildet sind.

Die Eingangsgrößen 101 werden in der Eingangsschicht 121 zu Zwischengrößen, die in Zwischenschichten 122, 123 weiterverarbeitet werden und dann der Ausgangsschicht 124 zugeführt werden, wo Ausgangsgrößen 103 generiert und ausgegeben werden, die die Verarbeitungsergebnisse der KI-Verarbeitungsalgorithmen 212, 222 bilden.

Die in Figur 4 dargestellten Verknüpfungen 125 können durch Training optimiert werden.

In den einzelnen Schichten des neuronalen Netzes 102 können folgende Bearbeitungsfunktionen realisiert sein:

Filterfunktionen (Frequenzgang)
und/oder Funktionszusammenhänge (Kennlinien, auch nichtlinear)
und/oder Übertragungsfunktionen (Frequenz und Kennlinie)
und/oder Entscheidungsmatrizen
und/oder Neuronale Vernetzungen, insbesondere mit Verknüpfungen 125.

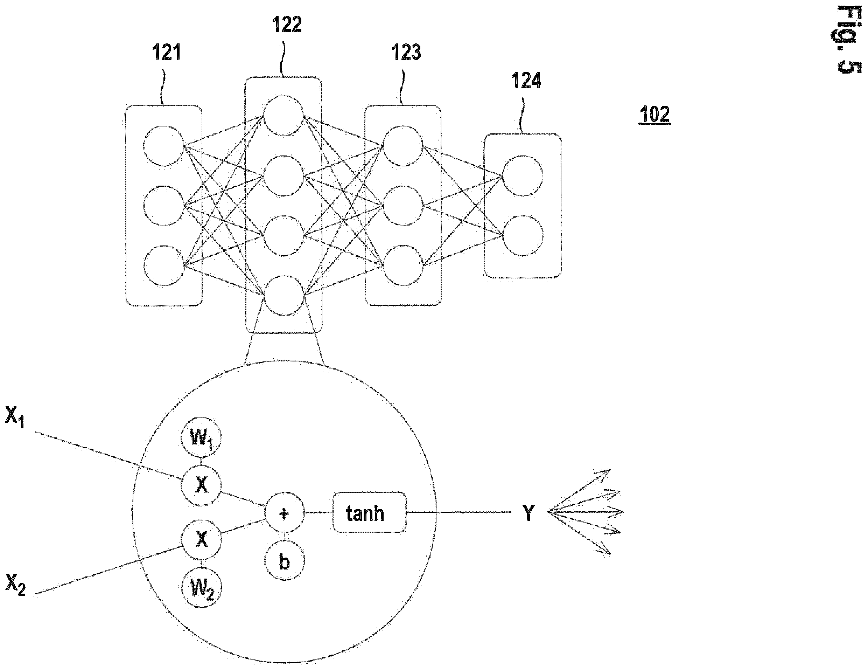

Figur 5 zeigt eine detaillierte Darstellung eines neuronalen Netzes 102 gemäß Figur 4.

Bei diesem neuronalen Netz 102 sind alle Neuronen einer Schicht mit jedem Neuron der nachfolgenden Schicht verknüpft. Die Eingangssignale $x_n$ eines Neurons werden gewichtet ($w_n$) und aufsummiert. Zusätzlich wird ein weiteres Gewicht (b) addiert. Zum Abschluss wird das Zwischenergebnis einer Transferfunktion (Aktivierungsfunktion) $f(z)$ unterworfen, um das Ausgangssignal y des Neurons zu erhalten.

Dabei sind:

| | |
|---|---|
| $x_1$, $x_2$ | Eingangsgrößen einer Einzelfunktion/eines Neurons |
| $w_1$, $w_2$, b | Gewichtungswerte |
| y | Ausgangsgröße(n) einer Einzelfunktion/eines Neurons mit Transferfunktion $f(z)$ Zum Beispiel: |

$$f(z) = \tanh(z)$$

$$\text{ReLU } f(z) = \begin{cases} xz & \text{für } z \geq 0 \\ 0 & \text{sonst} \end{cases}'$$

lineare Funktion $f(z) = a \cdot z + c$

Sigmoid $f(z) = \frac{1}{1+e^{-z}}'$

Durch Variation von Verknüpfungen 125 und Gewichtungen kann das neuronale Netz 102 trainiert (Optimierung der Verknüpfungen 125 und Parameter) werden, indem Ergebnisse für viele Eingangsvariationen geprüft/bewertet werden. Daraus ergeben sich für jeden Knoten des neuronalen Netzes 102 Parameter. Im vorliegenden Beispiel die Gewichtungswerte *wj, s, i, wjs. i, bs, i* je Knotenverbindung, im Layer s und innerhalb jedes Layer s die Elemente i.

Derartige Berechnungs-Parameter eines für die KI-Verarbeitungsalgorithmen 212, 222 vorgesehenen Netzes werden erfindungsgemäß dadurch auf Fehler überprüft, dass für diese Signaturen berechnet werden, die dann mit vorgegebenen Sollwerten verglichen werden.

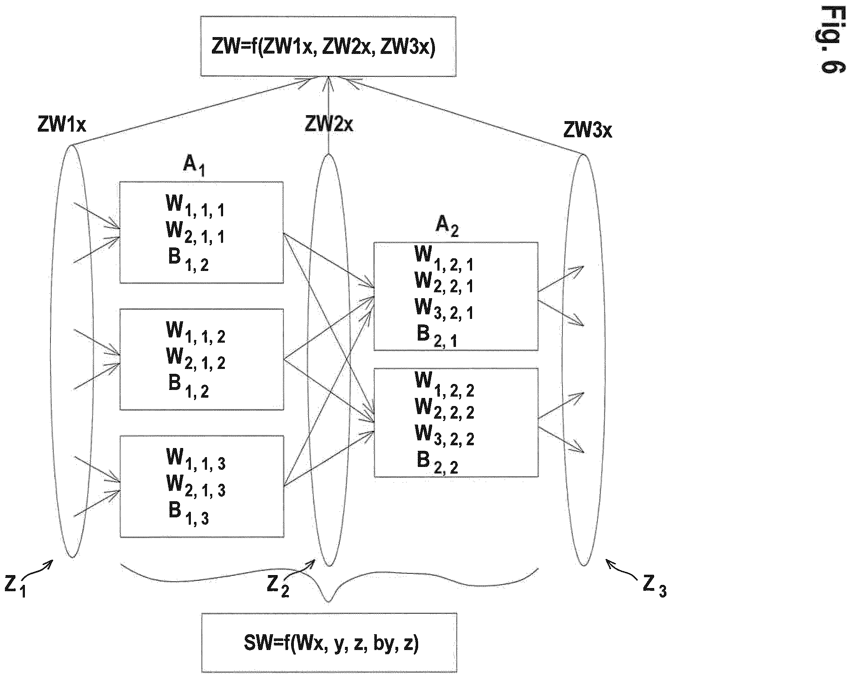

Ein Beispiel hierfür zeigt Figur 6. Dort ist als Teil eines neuronalen Netzes 102 ein Inferenz-Subsystem mit 2 Algorithmus-Schichten $A_1$, $A_2$ und drei Zwischenergebnisschichten $Z_1$, $Z_2$, $Z_3$ dargestellt.

Dabei sind $W_{x,y,z}$ und $B_{x,y}$ die Wichtungsparameter der Algorithmusschichten, wobei die Indizes x, *y, z* folgende Bedeutungen haben:

x   Eingang
y   Schicht
z   Knoten

Die Wichtungsparameter werden durch ein Training optimiert. Um Fehler des neuronalen Netzes 102 aufzudecken, werden für Wichtungsparameter Signaturen berechnet, die mit vorgegebenen Sollwerten verglichen werden. Die Signaturen können Prüfsummen, insbesondere CRC Prüfsummen sein.

In Figur 6 sind mit SW Signaturen von Wichtungsparametern und mit ZW Signaturen von Zwischenergebnisschichten bezeichnet.

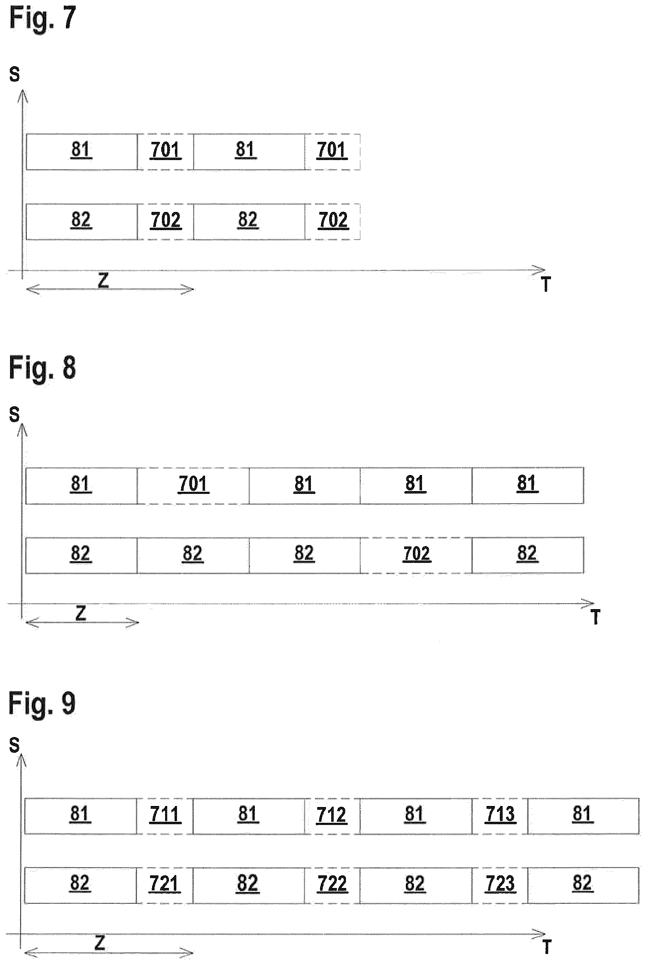

Die Figuren 7 bis 9 zeigen beispielhafte Zeitabläufe von Signalen S bei der Sensoranordnung 1 gemäß Figur 3.

Dabei ist in den Figuren 7 bis 9 mit Z der Systemzyklus der beiden Kanäle mit den KI-Verarbeitungsalgorithmen 212, 222 bezeichnet. Jeweils die obere Reihe in den Figuren 7 bis 9 zeigt Signale des Kanals A zur Auswertung der Sensorsignale des Sensors 2a. Jeweils die untere Reihe in den Figuren 7 bis 9 zeigt die Signale des Kanals B zur Auswertung der Sensorsignale des Sensors 2b.

In den Figuren 7 bis 9 sind mit der Bezugsziffer 81 Inferenz-Zyklen, das heißt Bearbeitungszyklen des KI-Verarbeitungsalgorithmus 212 in Kanal A bezeichnet. Mit der Bezugsziffer 82 sind Inferenz-Zyklen des KI-Verarbeitungsalgorithmus 222 im Kanal B bezeichnet.

In den Figuren 7 und 8 sind mit den Bezugsziffern 701 und 702 Signaturtestzyklen bezeichnet, in welchen der KI-Verarbeitungsalgorithmus 212 beziehungsweise 222 in seiner Gesamtheit anhand von Signaturen überprüft werden.

Bei dem Beispiel gemäß Figur 7 laufen die Signatur-Prüfungen in den Signaturtestzyklen 701, 702 zeitlich parallel ab.

In dem Beispiel gemäß Figur 8 sind die Signaturtestzyklen 701, 702 zeitlich versetzt.

Wenn in jeweils einem Kanal Signatur-Prüfungen durchgeführt werden, werden die Ergebnisse des Inferenz-Zyklus 81 beziehungsweise 82 des anderen Kanals in der Entscheidereinheit 23 alleine zur Generierung des Gesamtergebnisses herangezogen, das heißt dann erfolgt in der Vergleichereinheit 24 kein Vergleich oder die Entscheidereinheit 23 übernimmt das Ergebnis der Vergleichereinheit 24 nicht.

Bei dem Beispiel gemäß Figur 9 verlaufen die Signatur-Prüfungen in den Kanälen A und B wieder parallel.

Bei dem Beispiel gemäß Figur 9 erfolgen in Signaturtestzyklen 711, 712, 713 Überprüfungen von Teilsystemen des KI-Verarbeitungsalgorithmus 212, wobei sich diese zu einer Gesamttestung des KI-Verarbeitungsalgorithmus 212 ergänzen. Entsprechend erfolgen in Signaturtestzyklen 721, 722 ,723 Überprüfungen von Teilsystemen des KI-Verarbeitungsalgorithmus 222, wobei sich diese zu einer Gesamttestung des KI-Verarbeitungsalgorithmus 222 ergänzen.

B ezugszei chenli ste

| (1) | Sensoranordnung |
|---|---|
| (2) | Sensor |
| (2a, b) | Sensor |
| (3) | Anlage |
| (4) | Steuerung |
| (5) | Gefahrenbereich |
| (6) | Rechnereinheit |
| (23) | Entscheidereinheit |
| (24) | Vergleichereinheit |
| (71) | Testeinheit |
| (72) | Testeinheit |
| (81) | Inferenz-Zyklus |
| (82) | Inferenz-Zyklus |
| (101) | Eingangsgröße |
| (102) | Neuronales Netz |
| (103) | Ausgangsgröße |
| (121) | Eingangsschicht |
| (122) | Zwischenschicht |
| (123) | Zwischenschicht |
| (124) | Ausgangsschicht |
| (125) | Verknüpfungen |
| (212) | KI-Verarbeitungsalgorithmus |
| (222) | KI-Verarbeitungsalgorithmus |
| (701) | Signaturtestzyklus |
| (702) | Signaturtestzyklus |
| (711) | Signaturtestzyklus |
| (712) | Signaturtestzyklus |
| (713) | Signaturtestzyklus |
| (721) | Signaturtestzyklus |
| (722) | Signaturtestzyklus |
| (723) | Signaturtestzyklus |

**Patentansprüche**

1. Sensoranordnung (1) mit wenigstens einem Sensor (2) zur Erfassung von Objekten in einem Überwachungsbereich, wobei Sensorsignale des wenigstens einen Sensors (2) wenigstens einer Verarbeitungseinheit mit einem KI(Künstliche Intelligenz)-Verarbeitungsalgorithmus (212, 222) zugeführt sind, und wobei aus in der Verarbeitungseinheit generierten Verarbeitungsergebnissen als Gesamtergebnis ein Ausgangssignal der Sensoranordnung (1) generiert wird, **dadurch gekennzeichnet, dass** für Berechnungs-Parameter des KI(Künstliche Intelligenz)-Verarbeitungsalgorithmus (212, 222) Signaturen berechnet werden, die mit vorgegebenen Sollwerten zur Durchführung von Fehlerkontrollen verglichen werden.

2. Sensoranordnung (1) nach Anspruch 1, **dadurch gekennzeichnet, dass** diese eine Sicherheitssensoranordnung ist, welche zur Überwachung eines Gefahrenbereichs (5) an einer Anlage (3) ausgebildet ist.

3. Sensoranordnung (1) nach Anspruch 2, **dadurch gekennzeichnet, dass** diese bei Registrieren eines Objekteingriffs im Gefahrenbereich (5) als Ausgangssignal eine Sicherheitsfunktion für die Anlage (3) generiert.

4. Sensoranordnung (1) nach einem der Ansprüche 1 bis 3, **dadurch gekennzeichnet, dass** eine mehrkanalige Anordnung von Verarbeitungseinheiten mit jeweils einem KI-Verarbeitungsalgorithmus (212, 222) vorgesehen ist.

5. Sensoranordnung (1) nach Anspruch 4, **dadurch gekennzeichnet, dass** jedem Kanal Sensorsignale eines Sensors (2, 2a, 2b) zugeführt werden.

6. Sensoranordnung (1) nach Anspruch 5, **dadurch gekennzeichnet, dass** unterschiedliche Sensoren (2, 2a, 2b) vorgesehen sind.

7. Sensoranordnung (1) nach einem der Ansprüche 4 bis 6, **dadurch gekennzeichnet, dass** aus Verarbeitungsergebnissen der KI-Verarbeitungsalgorithmen (212, 222) der Verarbeitungseinheiten das Gesamtergebnis generiert wird.

8. Sensoranordnung (1) nach einem der Ansprüche 4 bis 7, **dadurch gekennzeichnet, dass** wenigstens eine Entscheidereinheit (23) vorgesehen ist, in welcher abhängig von den Verarbeitungsergebnissen der KI-Verarbeitungsalgorithmen (212, 222) das Gesamtergebnis erzeugt ist.

9. Sensoranordnung (1) nach Anspruch 7, **dadurch gekennzeichnet, dass** in der Entscheidereinheit (23) die Verarbeitungsergebnisse logisch verknüpft werden.

**10.** Sensoranordnung (1) nach Anspruch 8 oder 9, **dadurch gekennzeichnet, dass** in der Entscheidereinheit (23) die Verarbeitungsergebnisse miteinander verglichen werden.

**11.** Sensoranordnung (1) nach einem der Ansprüche 4 bis 10, **dadurch gekennzeichnet, dass** anhand von berechneten Signaturen eine gegenseitige Überwachung von Kanälen der mehrkanaligen Anordnung von KI-Verarbeitungsalgorithmen (212, 222) durchgeführt wird.

**12.** Sensoranordnung (1) nach einem der Ansprüche 1 bis 11, **dadurch gekennzeichnet, dass** Signaturen für Zwischenergebnisse, Verarbeitungsergebnisse und das Gesamtergebnis berechnet werden.

**13.** Sensoranordnung (1) nach einem der Ansprüche 11 und 12, **dadurch gekennzeichnet, dass** entsprechende Signaturen unterschiedlicher Kanäle miteinander verglichen werden.

**14.** Sensoranordnung (1) nach einem der Ansprüche 1 bis 13, **dadurch gekennzeichnet, dass** in den Kanälen zyklische Signatur-Prüfungen durchgeführt werden.

**15.** Sensoranordnung (1) nach Anspruch 14, **dadurch gekennzeichnet, dass** die Signatur-Prüfungen während vorgegebener Zeitintervalle durchgeführt werden.

**16.** Sensoranordnung (1) nach einem der Ansprüche 4 bis 15, **dadurch gekennzeichnet, dass** die Signatur-Prüfungen in den einzelnen Kanälen zeitlich versetzt durchgeführt werden.

**17.** Sensoranordnung (1) nach Anspruch 16, **dadurch gekennzeichnet, dass** Verarbeitungsergebnisse eines Kanals für die Dauer, in welchem in diesem Kanal Signatur-Prüfungen durchgeführt werden, bei der Berechnung des Gesamtergebnisses nicht berücksichtigt werden.

**18.** Sensoranordnung (1) nach einem der Ansprüche 16 oder 17, **dadurch gekennzeichnet, dass** mit einzelnen Signatur-Prüfungen nur einzelne Schichten von KI-Verarbeitungsalgorithmen (212, 222) geprüft werden.

**19.** Sensoranordnung (1) nach einem der Ansprüche 4 bis 18, **dadurch gekennzeichnet, dass** die KI-Verarbeitungsalgorithmen (212, 222) der einzelnen Kanäle diversitär ausgebildet sind oder mit diversitären Parametern arbeiten.

**20.** Sensoranordnung (1) nach einem der Ansprüche 1 bis 19, **dadurch gekennzeichnet, dass** die Signaturen in Form von Prüfsummen ausgebildet sind.

**21.** Sensoranordnung (1) nach Anspruch 20, **dadurch gekennzeichnet, dass** die Signaturen mit CRC-Algorithmen berechnet werden.

**22.** Sensoranordnung (1) nach einem der Ansprüche 1 bis 21, **dadurch gekennzeichnet, dass** Sensoren (2, 2a, 2b) in Form von Radarsensoren, Ultraschallsensoren oder optischen Sensoren vorgesehen sind.

**23.** Sensoranordnung (1) nach einem der Ansprüche 1 bis 22, **dadurch gekennzeichnet, dass** Sensoren (2, 2a, 2b) in Form von Kamerasensoren oder Flächendistanzsensoren ausgebildet sind.

**24.** Sensoranordnung (1) nach einem der Ansprüche 1 bis 23, **dadurch gekennzeichnet, dass** in den oder die KI-Verarbeitungsalgorithmen (212, 222) Testgrößen eingegeben und durch erhaltene Ergebnisgrößen mit vorgegebenen Soll-Ergebnisgrößen verglichen werden.

**25.** Verfahren zum Betrieb einer Sensoranordnung (1) mit wenigstens einem Sensor (2) zur Erfassung von Objekten in einem Überwachungsbereich, wobei Sensorsignale des wenigstens einen Sensors (2) wenigstens einer Verarbeitungseinheit mit einem KI(Künstliche Intelligenz)-Verarbeitungsalgorithmus (212, 222) zugeführt sind, und wobei aus in der Verarbeitungseinheit generierten Verarbeitungsergebnissen als Gesamtergebnis ein Ausgangssignal der Sensoranordnung (1) generiert wird, **dadurch gekennzeichnet, dass** für Berechnungs-Parameter des KI(Künstliche Intelligenz)-Verarbeitungsalgorithmus (212, 222) Signaturen berechnet werden, die mitvorgegebenen Sollwerten zur Durchführung von Fehlerkontrollen verglichen werden.

# Fig. 1

# Fig. 2

# Fig. 3

Fig. 4

Fig. 5

EP 4 098 928 A1

# Fig. 6

ZW3x

$Z_3$

$A_2$

$W_{1,2,2,1}$
$W_{2,2,2,1}$
$W_{3,2,2,1}$
$B_{2,1}$

$W_{1,2,2,2}$
$W_{2,2,2,2}$
$W_{3,2,2,2}$
$B_{2,2}$

ZW=f(ZW1x, ZW2x, ZW3x)

ZW2x

SW=f(Wx, y, z, by, z)

$Z_2$

$A_1$

$W_{1,1,1,1}$
$W_{2,1,1,1}$
$B_{1,2}$

$W_{1,1,1,2}$
$W_{2,1,1,2}$
$B_{1,2}$

$W_{1,1,1,3}$
$W_{2,1,1,3}$
$B_{1,3}$

ZW1x

$Z_1$

**Fig. 7**

| | | | |
|---|---|---|---|
| **81** | **701** | **81** | **701** |

| | | | |
|---|---|---|---|
| **82** | **702** | **82** | **702** |

Z

T

S

**Fig. 8**

| | | | | |
|---|---|---|---|---|
| **81** | **701** | **81** | **81** | **81** |

| | | | | |
|---|---|---|---|---|
| **82** | **82** | **82** | **702** | **82** |

Z

T

S

**Fig. 9**

| | | | | | | |
|---|---|---|---|---|---|---|
| **81** | **711** | **81** | **712** | **81** | **713** | **81** |

| | | | | | | |
|---|---|---|---|---|---|---|
| **82** | **721** | **82** | **722** | **82** | **723** | **82** |

Z

T

S

**Europäisches Patentamt**
**European Patent Office**
**Office européen des brevets**

# EUROPÄISCHER RECHERCHENBERICHT

Nummer der Anmeldung

EP 21 17 7330

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2005 063217 A1 (PILZ GMBH & CO KG [DE]) 5. Juli 2007 (2007-07-05) <br> * Absatz [0054] - Absatz [0066] * <br> * Abbildungen 1-5 * <br> * Absatz [0088] - Absatz [0089] * <br> ----- | 1-25 | INV. <br> F16P3/14 |
| A | WO 2021/084231 A1 (TRIPLE LIDAR TECH LTD [GB]) 6. Mai 2021 (2021-05-06) <br> * Seite 11 - Seite 12 * <br> ----- | 1-25 | |

**RECHERCHIERTE SACHGEBIETE (IPC)**

F16P

Der vorliegende Recherchenbericht wurde für alle Patentansprüche erstellt

| Recherchenort | Abschlußdatum der Recherche | Prüfer |
|---|---|---|
| Den Haag | 19. Oktober 2021 | Terrier de la Chaise |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

&: Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 21 17 7330

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

19-10-2021

| Im Recherchenbericht angeführtes Patentdokument | Datum der Veröffentlichung | Mitglied(er) der Patentfamilie | Datum der Veröffentlichung |
|---|---|---|---|
| DE 102005063217 A1 | 05-07-2007 | CN 101346744 A | 14-01-2009 |
| | | DE 102005063217 A1 | 05-07-2007 |
| | | EP 1964063 A2 | 03-09-2008 |
| | | JP 4990291 B2 | 01-08-2012 |
| | | JP 2009521022 A | 28-05-2009 |
| | | US 2009015663 A1 | 15-01-2009 |
| | | US 2015377413 A1 | 31-12-2015 |
| | | WO 2007079883 A2 | 19-07-2007 |
| WO 2021084231 A1 | 06-05-2021 | GB 2588650 A | 05-05-2021 |
| | | WO 2021084231 A1 | 06-05-2021 |

EPO FORM P0461

Für nähere Einzelheiten zu diesem Anhang : siehe Amtsblatt des Europäischen Patentamts, Nr.12/82